# EUROPEAN PATENT APPLICATION

(11) **EP 2 571 141 A1**
(43) Date of publication of application: **20.03.2013**
(21) Application number: 11181342.4
(22) Date of filing: 15.09.2011
(51) Int. Cl.: H02K 1/14, H02K 7/18

(54) **Generator**

(71) Applicant: Siemens Aktiengesellschaft, 80333 München (DE)
(72) Inventor: Semmer, Silvio, 7330 Brande (DK)

(57) **Abstract**

Generator (1), comprising a rotor (6) and a stator (2), with the rotor (6) comprising a number of magnet poles and the stator (2) comprising a number n of sets of stator windings (5a, 5b, 5c), with each set of stator windings (5a, 5b, 5c) being related to a specific current phase, wherein the stator (2) is axially segmented in respective stator segments (2a, 2b, 2c), whereby each respective stator segment (2a, 2b, 2c) comprises a respective set of stator windings (5a, 5b, 5c).

## Description

The invention relates to a generator, comprising a rotor and a stator, with the rotor comprising a number of magnet poles and the stator comprising a number n of sets of stator windings, with each set of stator windings being related to a specific current phase.

It is known to have generators with a number n, particularly three, of sets of stator windings, whereby each set of stator windings is related to a specific current phase. The respective sets of stator windings are usually circumferentially distributed in order to create a moving magnetic field in alternating or successive manner respectively. Hence, with regard to a three-phase generator, ie the stator comprises three sets of stator windings, the connection of respective first sets of stator windings has to extend over two respective neighbouring stator slots which accommodate second and third sets of stator windings which obviously requires comparatively large amounts of material for the respective end windings.

Aside, the circumferential distribution of the sets of stator windings and no changing axial distribution may lead to changes of the magnetic resistance seen from the rotor and further to cogging torque which may only be solved with shaping, skewing, or displacement of the magnet poles of the rotor and a proper control scheme which is comparatively cumbersome.

Hence, it is the object of the present invention to provide an improved generator, particularly regarding a reduced amount of stator winding material.

This is inventively achieved by a generator as described before, wherein the stator is axially segmented in respective stator segments, whereby each respective stator segment comprises a respective set of stator windings.

The invention is based on the idea to distribute the respective sets of stator windings not only in circumferential direction but also in axial direction (cf. centre axis of the generator). In such a manner, the generator originally being a multi-phase electric machine in dependence of the number of respective sets of stator windings is segmented in respective one-phase electric machines each built through a respective stator segment each having only one respective set of stator windings.

Thus, when concerning one of the respective one-phase electric machines respectively, the amount of material for the respective set of stator windings is essentially reduced since the respective set of stator windings may be conducted from one stator slot directly to the next circumferentially abutting or neighbouring stator slot saving stator winding material and reducing the losses in the region of the axial stator winding overhang.

Referring to a concrete constructive design of a respective stator segment, all stator slots defined by respective radially extending stator tooth accommodate the same set of stator windings, further stator slots of a further stator segment accommodate a further set of stator windings, etc.

It is possible that additionally, the rotor is axially segmented in respective rotor segments. This embodiment enhances the idea of respective separate one-phase generators or electric machines respectively since each of the axial stator segments is allocated to a respective axial rotor segment. Thus, the respective axial and stator and rotor segments building a respective one-phase generator or electric machine respectively share the same axial position.

Thereby, it is possible that the rotor magnet poles are circumferentially segmented in respective magnet pole segments. In this manner, the magnetic properties of the entire generator may be homogenised and hence improved.

Generally, it is preferred that the number of rotor and stator segments corresponds to the number of sets of stator windings. The characteristics of the multi-phase generator being split into respective separate axially adjacently disposed one-phase generators may be enhanced.

The respective axial stator segments and if need be rotor segments are preferably axially adjacently disposed one after another leading to the mentioned generator topology. Thereby, the respective stator segments may be axially interconnected with each other, whereby at least one stator segment is connected to a stationary, ie non-rotating component of the inventive generator. A like principle applies to the respective rotor segments, ie the rotor segments may be interconnected with each other, whereby at least one rotor segment is connected to a rotating component of the inventive generator.

It is preferred that either the respective stator or if need be rotor segments are disposed with a circumferential offset relative to each other. In such a manner, the electric properties of the respective one-phase electric machines may be enhanced. It is important that either the rotor or the stator segments are provided with the circumferential offset since if both the rotor and stator segments were provided with the same circumferential offset the inventive principle of building separate one-phase electric machines would be nullified.

The respective circumferential offset angle is preferably the same for all respective rotor or stator segments. The circumferential offset angle may be 120° for a generator having a stator with three respective sets of stator windings, ie three respective stator and/or rotor segments for instance. Generally, the respective the circumferential offset of the respective stator or rotor segments corresponds to n/360°. Of course, ie the number of stator or rotor segments preferably defines the offset angle.

According to a practical embodiment of the invention, the stator comprises three different sets of stator windings, with the rotor and the stator being axially segmented in three respective rotor and stator segments, whereby either the respective rotor or stator segments are disposed with a circumferential offset of 120°. Hence, a three-phase electric machine is divided in three respective one-phase electric machines, whereby either the respective stator or rotor segments are circumferentially offset by ca. 120° relative to each other.

Aside, the invention relates to a wind turbine, particularly a direct drive wind turbine, comprising a generator as has been described before.

In the following, the invention is described in detail as reference is made to the figures, whereby:
- Fig. 1: a principle perspective view of an inventive stator according to an exemplary embodiment of the invention;
- Fig. 2: a principle topology of inventive axial stator and rotor segments according to a further exemplary embodiment of the invention; and
- Fig. 3: a principle topology of inventive axial stator and rotor segments according to a further exemplary embodiment of the invention.

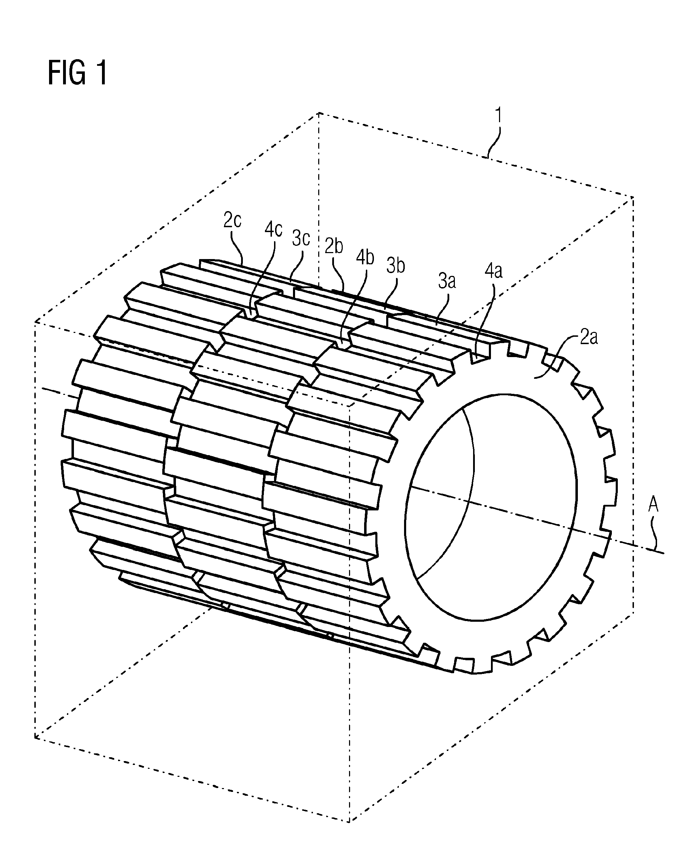

Fig. 1 shows a principle perspective view of an inventive stator 2 according to an exemplary embodiment of the invention. The stator 2 is part of a generator 1 of a wind turbine, particularly a direct drive wind turbine (not shown). The wind turbine may be applicable for offshore applications.

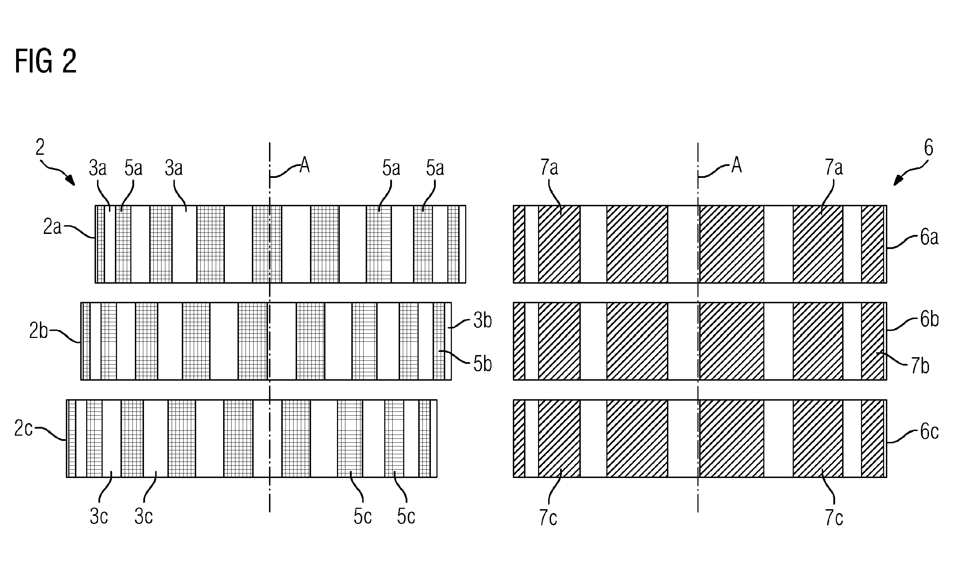

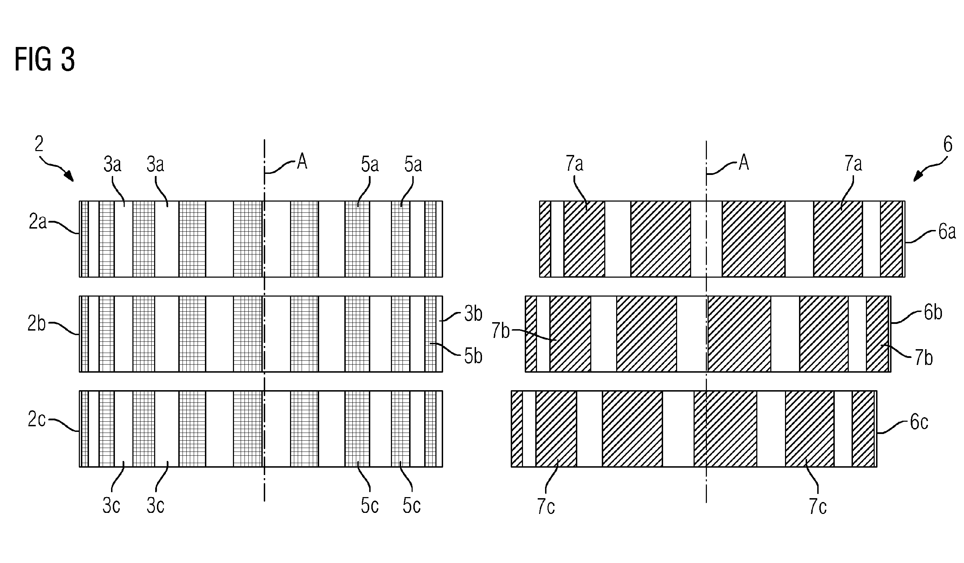

The generator 1 comprises a rotor 6 (cf. fig. 2, 3) and a stator 2, with the rotor 6 comprising a number of magnet poles and being rotatably supported in relation to the stator 2. As is discernible, the stator 2 is axially divided or split up into three stator segments 2a, 2b, 2c with the respective stator segments 2a, 2b, 2c being axially disposed one after another. The respective stator segments 2a, 2b, 2c abut each other in axial direction. Of course, a proper axial gap is provided with the respective stator segments 2a, 2b, 2c which is used for the respective end windings. Aside, the respective stator segments 2a, 2b, 2c are circumferentially offset relative to each other by a certain offset angle like 120° for instance. The centre axis of the generator is denoted as A.

Each respective stator segment 2a, 2b, 2c has a ring-like shape, whereby stator tooth 3a, 3b, 3c radially extend off the outer circumference of the respective stator segments 2a, 2b, 2c forming respective stator slots 4a, 4b, 4c adapted to accommodate only one respective set of stator windings 5a, 5b, 5c (cf. fig. 2, 3), with the respective sets of stator windings are related to different current phases.

Ie the right stator segment 2a comprises only set of stator windings 5a disposed within the respective stator slots 4a, the middle stator segment 2b comprises only set of stator windings 5b within the respective stator slots 4b, and the left stator segment 2c comprises only set of stator windings 5c. Hence, in electric regard the inventive generator 1 comprising the stator 2 may be deemed as three separate one-phase electric machines instead of one three-phase electrical machine. In such a manner, overhang winding material may be reduced since each respective stator segment 2a, 2b, 2c comprises only one respective set of stator windings 5a, 5b, 5c, i.e. the respective sets of stator windings 5a, 5b, 5c are allocated to separate stator segments 2a, 2b, 2c. Aside, thermal losses occurring in the region of the end windings may be diminished.

Fig. 2, 3 show principle topologies of inventive axial stator 2a, 2b, 2c and rotor segments 6a, 6b, 6c according to exemplary embodiments of the invention. Thereby, both stator 2 and rotor 6 are shown in separate manner with stator 2 on the left and rotor 6 on the right. Fig. 2, 3 are merely partial views showing the characteristics of the inventive principle.

Thereby, each stator segment 2a, 2b, 2c is related to a respective rotor segment 6a, 6b, 6c building pairs 2a-6a, 2b-6b, 2c-6c of stator and rotor segments with each pair 2a-6a, 2b-6b, 2c-6c represents a one-phase electric machine. The rotor segments 6a, 6b, 6c together build the rotor 6 of the generator 1. Each rotor segment 6a, 6b, 6c comprises respective magnet poles 7a, 7b, 7c homogenously distributed along the outer circumference of the respective rotor segments 6a, 6b, 6c. As is discernible, the number of rotor and stator segments 2a, 2b, 2c, 6a, 6b, 6c corresponds to the number of sets of stator windings 5a, 5b, 5c.

According to the embodiment of fig. 2, the stator segments 2a, 2b, 2c are circumferentially offset by 120° which can be seen from the respective stator tooth 3a, 3b, 3c or sets of stator windings 5a, 5b, 5c which are axially not in line (cf. centre axis A). According to the embodiment of fig. 3, the rotor segments 6a, 6b, 6c are circumferentially offset by 120°.

The inventive generator topology may be deemed as a kind of skewing approach. Yet, it does not suffer from reduced torque as conventional skewing does. Each of the respective one-phase electric machines built by the respective pairs 2a-6a, 2b-6b, 2c-6c of stator and rotor segments has a defined cogging torque. However, regarding the entire generator the cogging torque is zero or at least essentially reduced in comparison to conventional configurations. Consequently, torque ripple may also be nullified or at least essentially reduced. The electric properties of the generator may be further improved when the respective magnet poles 7a, 7b, 7c provided with the respective rotor segments 6a, 6b, 6c are circumferentially segmented in respective magnet pole segments, ie the number of magnet poles 7a, 7b, 7c is increased in comparison to conventional configurations. It is possible that the number of magnet poles 7a, 7b, 7c corresponds to the number of stator slots 4a, 4b, 4c, i.e. the number of magnet poles 7a, 7b, 7c essentially corresponds to the number of stator windings within the stator slots 4a, 4b, 4c.

Though the fig. show axial segmentations of stator 2 and/or rotor 6 in three respective segments, it is also possible to segment the stator 2 and rotor 6 in two or more than three respective axial segments.

Although the present invention has been described in detail with reference to the preferred embodiment, the present invention is not limited by the disclosed examples from which the skilled person is able to derive other variations without departing from the scope of the invention.

## Claims

1. Generator (1), comprising a rotor (6) and a stator (2), with the rotor (6) comprising a number of magnet poles and the stator (2) comprising a number n of sets of stator windings (5a, 5b, 5c), with each set of stator windings (5a, 5b, 5c) being related to a specific current phase, wherein the stator (2) is axially segmented in respective stator segments (2a, 2b, 2c), whereby each respective stator segment (2a, 2b, 2c) comprises a respective set of stator windings (5a, 5b, 5c) .

2. Generator according to claim 1, wherein additionally, the rotor (6) is axially segmented in respective rotor segments (6a, 6b, 6c).

3. Generator according to claim 2, wherein the respective magnet poles are circumferentially segmented in respective magnet pole segments (7a, 7b, 7c).

4. Generator according to claim 2 or 3, wherein the number of stator segments (2a, 2b, 2c) and rotor segments (6a, 6b, 6c) corresponds to the number of sets of stator windings.

5. Generator according to one of the preceding claims, wherein the respective stator segments (2a, 2b, 2c) and if need be rotor segments (6a, 6b, 6c) are axially adjacently disposed.

6. Generator according to one of the preceding claims, wherein either the respective stator segments (2a, 2b, 2c) or if need be rotor segments (6a, 6b, 6c) are disposed with a circumferential offset relative to each other.

7. Generator according to claim 6, wherein the circumferential offset of the respective stator segments (2a, 2b, 2c) or rotor segments (6a, 6b, 6c) corresponds to n/360°.

8. Generator according to one of the claims 2 to 7, wherein the stator (2) comprises three different sets of stator windings (5a, 5b, 5c), with the stator (2) and the rotor (6) being axially segmented in three respective stator segments (2a, 2b, 2c) and rotor segments (6a, 6b, 6c), whereby either the respective stator segments (2a, 2b, 2c) or rotor segments (6a, 6b, 6c) are disposed with a circumferential offset of 120°.

9. Wind turbine, particularly direct drive wind turbine, comprising a generator (1) according to one of the preceding claims.
